# EUROPÄISCHE PATENTANMELDUNG

(11) **EP 3 037 803 A1**
(43) Veröffentlichungstag der Anmeldung: **29.06.2016**
(21) Anmeldenummer: 14199824.5
(22) Anmeldetag: 22.12.2014
(51) Int. Cl.: G01N 15/02, G01N 21/15, G01N 21/956, G01N 15/14, G01N 15/00, G01N 35/00

(54) **Vorrichtung zur durchstrahlenden Untersuchung einer Flüssigkeit**

(71) Anmelder: Grundfos Holding A/S, 8850 Bjerringbro (DK)
(72) Erfinder: Dahlqvist, Mathis, 7100 Vejle (DK); Guldbæk Smith, Christian, 8541 Skødstrup (DK); Iversen, Kåre, 8870 Langå (DK)
(74) Vertreter: Patentanwälte Vollmann & Hemmer

(57) **Zusammenfassung**

Die Vorrichtung ist zur durchstrahlenden Untersuchung einer Flüssigkeit vorgesehen. Die zu untersuchende Flüssigkeit ist in einem Flüssigkeitsträger (5) mit einem Fenster (4) angeordnet, wobei zu einer Seite des Fensters (4) eine Strahlungsquelle (1) und zur anderen Seite des Fensters (4) ein Empfänger (3) angeordnet ist und eine Auswertelektronik zur Auswertung des Empfängersignals vorgesehen ist. Es sind Mittel zum Reinigen des Fensters oder zum Wechsel des Flüssigkeitsträgers vorgesehen, um auch über lange Zeit sicherzustellen, dass Ablagerungen im Fenster das Untersuchungsergebnis nicht spürbar beeinträchtigen.

## Beschreibung

Die Erfindung betrifft eine Vorrichtung zur durchstrahlenden Untersuchung einer Flüssigkeit mit den im Oberbegriff des Anspruchs 1 angegebenen Merkmalen.

Eine gattungsgemäße Vorrichtung ist aus EP 2 469 264 A1 bekannt. Die dort beschriebene Vorrichtung dient zur durchstrahlenden Untersuchung einer Flüssigkeit, beispielsweise von Trinkwasser und weist einen Flüssigkeitsträger auf, der die zu untersuchende Flüssigkeit aufnimmt und ein Fenster aufweist, wobei zu einer Seite dieses Fensters eine Strahlungsquelle und zur anderen Seite ein Empfänger angeordnet ist. Mittels einer Auswertelektronik wird das Empfängersignal ausgewertet, beispielsweise hinsichtlich der qualitativen und quantitativen Erfassung von Partikeln, wie Bakterien, Schmutzpartikeln und dergleichen. Auch wenn der Flüssigkeitsträger z. B. für die Untersuchung von Trinkwasser durchströmbar ausgebildet sein kann, so erfolgt die Untersuchung selbst vorzugsweise, aber nicht notwendigerweise, in quasi stationärem Zustand, d. h. wenn sich die im Flüssigkeitsträger befindliche Flüssigkeit soweit beruhigt hat, dass die darin befindlichen Partikel quasi stationär angeordnet sind. Eine solche Vorrichtung im Einzelnen beschrieben ist in der europäischen Patentanmeldung 14 186 884.4 der Anmelderin, auf die insoweit inhaltlich verwiesen wird.

Um eine solche Vorrichtung über einen längeren Zeitraum betreiben zu können, sind regelmäßig wiederkehrende Wartungsarbeiten erforderlich. Hierzu zählen insbesondere auch die Reinigung, d. h. das Entfernen der im optischen Strahlengang befindlichen Ablagerungen, sei es Staub, der sich aufgrund der meist thermisch bedingten Luftbewegungen innerhalb der Vorrichtung absetzt oder aber Ablagerungen durch die Flüssigkeit selbst. So kommt es bei der Untersuchung von Trinkwasser vor, dass sich insbesondere im Bereich des Fensters, also dort wo eine optische Erfassung der Probe erfolgt, Ablagerungen bilden. Solche Ablagerungen können durch im Wasser mitgeführte Partikel gebildet sein, insbesondere ist jedoch bei Wasser stets eine Veralgung problematisch, auch können sich organische Ablagerungen (Biofilm) im Bereich des Fensters bilden, die meist nur in aufwendiger Handarbeit und meist auch nur unvollständig entfernt werden können.

Vor diesem Hintergrund liegt der Erfindung die Aufgabe zugrunde, eine gattungsgemäße Vorrichtung so auszugestalten, dass die Vorrichtung ohne manuelle Eingriffe oder Wartungsarbeiten langzeitstabil betrieben werden kann, insbesondere die vorgenannten Probleme weitgehend vermieden werden.

Diese Aufgabe wird gemäß der Erfindung durch eine Vorrichtung mit den in Anspruch 1 angegebenen Merkmalen gelöst. Vorteilhafte Ausgestaltungen dieser Vorrichtung sind in den Unteransprüchen, der nachfolgenden Beschreibung und der Zeichnung angegeben. Dabei können die in den Unteransprüchen und der Beschreibung angegebenen Merkmale jeweils für sich aber auch in geeigneter Kombination die erfindungsgemäße Lösung gemäß Anspruch 1 weiter ausgestalten.

Gemäß der Erfindung weist die Vorrichtung Mittel zur Reinigung des Fensters und/oder zum Wechsel des Fensters oder des Flüssigkeitsträgers auf.

Grundgedanke der erfindungsgemäßen Vorrichtung ist es, entweder die sich im Laufe des Betriebs, insbesondere im Bereich des Fensters, bildenden Ablagerungen, Verunreinigungen und dergleichen zu entfernen oder das Fenster selbst oder den Flüssigkeitsträger mit dem Fenster zu wechseln. Dieses Wechseln erfolgt gemäß der Erfindung automatisiert, d. h. ohne manuelle Eingriffe.

Flüssigkeitsträger im Sinne der vorliegenden Erfindung kann grundsätzlich ein abgeschlossenes Gefäß sein, bevorzugt ist dies jedoch ein durchströmbarer Flüssigkeitsträger, d. h. ein solcher, der zum Austausch der Flüssigkeit vorgesehen und durchströmbar ist, aber bei welchem die Flüssigkeit nur zum Zwecke des Untersuchungsvorganges quasi stationär ist, mit dem nacheinander folgend eine Vielzahl von Flüssigkeitsproben untersucht werden kann, bevor eine Reinigung oder ein Wechsel erfolgen. Vorteilhaft kann ein Reinigungsverfahren oder ein Wechselverfahren dann eingeleitet werden, wenn eine vorbestimmte Menge Flüssigkeit durch den Flüssigkeitsträger durchgeströmt ist, oder wenn eine vorbestimmte Anzahl von Proben untersucht worden sind. Diese vorbestimmten Werte können in Abhängigkeit des Flüssigkeitsmediums gewählt werden, z. B. ist der Wert für Schmutzwasser niedriger als für Trinkwasser.

Gemäß einer vorteilhaften Weiterbildung der Erfindung weist die Vorrichtung Mittel auf, welche den Verschmutzungsgrad des Fensters selbsttätig erfassen und bei Erreichen eines vorbestimmten Verschmutzungsgrades einen Reinigungs- oder Wechselvorgang einleiten. Durch die Verschmutzung wird die beim Empfänger ankommende Strahlungsmenge verringert. Dabei kann der Verschmutzungsgrad sowohl anhand der Verringerung der empfangenen Strahlung aber auch bei Überschreiten einer Menge von Messfeldern festgestellt werden, die nach einem vorgegebenen Algorithmus von der Auswerteinrichtung als für die Auswertung ungeeignet eingestuft werden. Auch eine Kombination dieser Verfahren ist zur Erfassung des Verschmutzungsgrades möglich. Wenn ein solcher vorbestimmter Verschmutzungsgrad von der Auswertelektronik erkannt wird, wird gemäß der Erfindung ein Reinigungs- oder Wechselvorgang eingeleitet, wobei gemäß einer Weiterbildung der Erfindung auch vorgesehen sein kann, dass, wenn der Reinigungsvorgang nicht den gewünschten Reinigungseffekt bringt, dann der Wechselvorgang eingeleitet wird. Dabei wird es ausreichen, nur das Fenster, d. h. die für die Strahlung der Strahlungsquelle durchgängigen Teile des Fensters zu ersetzen oder alternativ den gesamten Flüssigkeitsträger zu tauschen.

Zur Reinigung des Fensters sind gemäß der Erfindung verschiedene Mittel vorgesehen, die für sich nacheinander oder auch in Kombination Anwendung finden können.

So kann gemäß einer Weiterbildung der Erfindung die Reinigung mittels Ultraschall erfolgen, wobei mindestens ein Ultraschallerzeuger vorgesehen ist, der mit dem Fenster schwingungsgekoppelt oder zum Zwecke der Reinigung mit diesem schwingungskoppelbar ist. Dabei kann der Ultraschallerzeuger mit dem gesamten Flüssigkeitsträger schwingungsgekoppelt werden oder aber mit nur dem Teil oder den Teilen des Schwingungsträgers, welche für die von der Strahlungsquelle ausgehenden Strahlungen durchgängig sein müssen. Wenn, wie in der Mehrzahl der Anwendungen, die Strahlungsquelle eine Lichtquelle ist, dann sind die durchsichtigen Wände des Fensters in Schwingung zu versetzen, um die dort befindlichen Ablagerungen zu entfernen.

Alternativ oder zusätzlich können zur Reinigung mechanische Mittel vorgesehen sein, die mindestens an der Innenseite des Fensters vorgesehen sind. Solche mechanischen Mittel können durch abstreiferähnliche Vorrichtung, durch Wischer oder dergleichen, gebildet sein, welche das Fenster zumindest an der Innenseite mechanisch beaufschlagen, d. h. zum Zwecke der Reinigung entlang des Fensters verfahren werden.

Weiterhin kann gemäß der Erfindung alternativ oder zusätzlich eine Reinigung mittels mindestens einer UV-Lichtquelle vorgesehen sein, welche zumindest den Bereich des Fensters bestrahlt oder zum Zwecke der Reinigung in eine Position verbringbar ist, in welcher dieser Bereich bestrahlt wird. Wenn eine solche UV-Lichtquelle nur einseitig des Flüssigkeitsträgers angeordnet wird, dann wird diese bevorzugt unterhalb des Flüssigkeitsträgers angeordnet, da erfahrungsgemäß dort die meisten Verschmutzungen und Ablagerungen auftreten. Insbesondere bei Vorrichtungen, die für die Untersuchung von Wasser vorgesehen sind, hat die Reinigung mittels UV-Lichts den Vorteil, dass eine keimtötende Wirkung eintritt.

Die Mittel zur Reinigung können gemäß der Erfindung auch Heizmittel sein, mit denen zumindest der Bereich des Fensters aufheizbar ist. Solche Heizmittel können durch eine elektrische Heizung gebildet sein oder auch durch ein Heißluftgebläse oder einen Heißwasserbereiter innerhalb der Vorrichtung, wobei der Flüssigkeitsträger dann mit heißer Luft oder heißer Flüssigkeit beschickbar ist.

Die Reinigung des Flüssigkeitsträgers kann somit auch durch Spülen desselben mit einem flüssigen oder gasförmigen Reinigungsmittel erfolgen, wobei gemäß einer Weiterbildung der Erfindung vorgesehen sein kann, für das Durchspülen mit einem erhöhten Druck zu arbeiten, um insbesondere im Bereich des Fensters eine erhöhte Strömungsgeschwindigkeit und damit einen Reinigungseffekt zu erzeugen. Dabei können gemäß einer Weiterbildung der Erfindung die flüssigen oder gasförmigen Reinigungsmittel nicht nur reinigende, sondern ggf. auch keimtötende und/oder abrasive Wirkung haben, um sicherzustellen, dass sich innerhalb des Flüssigkeitsträgers kein Biofilm bildet. Alternativ oder zusätzlich können auch an der Außenseite des Flüssigkeitsträgers, an der Strahlungsquelle und/oder am Empfänger Gasaustrittsdüsen vorgesehen sein, welche eine Reinigung der entsprechenden Oberflächen durch Druckgas bewirken.

Es kann vorkommen, dass nach einer gewissen Zahl von Reinigungsvorgängen durch einen weiteren Reinigungsvorgang die gewünschte Reinigungswirkung nicht mehr oder nicht in der erforderlichen Weise eintritt. Für diesen Fall oder alternativ zur Reinigung kann gemäß einer Weiterbildung der Erfindung der Flüssigkeitsträger im Bereich des Fensters an zwei Seiten durch je eine durchstrahlbaren Wandungsabschnitt abgeschlossen sein, wobei zwischen diesen Wandungsabschnitten die zu untersuchende Flüssigkeit angeordnet ist und die Wandungsabschnitte Teil mindestens einer Wandung sind, die zum Zwecke des Austausches eines Wandungsabschnittes relativ zum Probenträger bewegbar ist. Grundgedanke dieser Weiterbildung ist es, die bestrahlbaren Wandungsabschnitte des Flüssigkeitsträgers zu tauschen. Solche Wandungsabschnitte können in einer Reihe nebeneinander angeordnet sein, wobei die Wandung dann streifenförmig ausgebildet ist und vorzugsweise aufgerollt innerhalb der Vorrichtung angeordnet ist. So wird zum Wechsel eines durchstrahlbaren Wandungsabschnittes die streifenförmige Wandung innerhalb des Flüssigkeitsträgers verschoben, d. h. ein sauberer Wandungsabschnitt in den Flüssigkeitsträger eingeschoben und der zuvor dort befindliche Wandungsabschnitt aus dem Flüssigkeitsträger herausgeschoben, wobei bevorzugt jeweils zwei Rollen vorgesehen sind, auf welchen eine Wandung aufgerollt ist, und zwar eine Rolle, auf welcher die noch nicht gebrauchten Wandungsabschnitte der Wandung aufgerollt sind und eine weitere, auf welcher die gebrauchten aufgewickelt sind. Ein solches Austauschsystem ist zweckmäßigerweise für beide durchstrahlbaren Wandungsabschnitte des Fensters vorgesehen, also sowohl an der Ober- als auch an der Unterseite. Abgedichtet sind die innerhalb des Flüssigkeitsträgers befindlichen Wandungsabschnitte über geeignete Dichtungen, insbesondere Dichtlippen. Alternativ können die Wandungsabschnitte auch Teil einer Scheibe sein, die drehbar innerhalb der Vorrichtung gelagert ist oder in anderer geeigneter Weise angeordnet sein.

Gemäß einer vorteilhaften Weiterbildung der Erfindung ist vorgesehen, dass der Flüssigkeitsträger selbst austauschbar ist und innerhalb der Vorrichtung entsprechende mechanische Mittel zum automatischen Wechsel des Flüssigkeitsträgers vorgesehen sind. Hierzu ist der Flüssigkeitsträger vorteilhaft in einer entsprechenden Aufnahme der Vorrichtung angeordnet. Die Vorrichtung weist ein Magazin auf, in dem mehrere Flüssigkeitsträger angeordnet sind, wobei eine Wechselmechanik vorgesehen ist, mit der der Flüssigkeitsträger aus der Aufnahme entfernt und durch einen Flüssigkeitsträger aus dem Magazin ersetzt werden kann. Das Magazin kann ein Stapelmagazin sein, es kann ein Trommelmagazin oder ein anderes geeignetes Lager zur Aufnahme mehrerer Flüssigkeitsträger sein. Dabei ist es vorteilhaft mindestens einseitig offen ausgebildet, und zwar zu der Seite hin, an welcher auch die Aufnahme offen ausgebildet ist. Dabei ist das Magazin verfahrbar ausgebildet, und zwar derart, dass jeder der innerhalb des Magazins angeordneten Flüssigkeitsträger in Flucht zur Aufnahme bringbar ist. Mit einer solchen vergleichsweise einfach aufgebauten und zu steuernden Mechanik kann der Wechsel des Flüssigkeitsträgers in einfacher Weise erfolgen, indem zunächst das Magazin mit einem freien Magazinplatz in Flucht zur Aufnahme verfahren wird, dann durch einen geeigneten Manipulator mittels eines Linearantriebs der in der Aufnahme befindliche Flüssigkeitsträger in das Magazin verschoben wird, wonach das Magazin in eine Position verfahren wird, in welcher ein neuer, noch ungebrauchter Flüssigkeitsträger in Flucht zur Aufnahme angeordnet ist, der dann mittels des Manipulators aus dem Magazin in die Aufnahme geschoben wird.

Vom mechanischen Aufbau besonders günstig ist es, wenn dabei das Magazin so ausgebildet ist, dass mehrere Flüssigkeitsträger in dafür vorgesehenen Fächern übereinander angeordnet sind und ein Linearantrieb innerhalb der Vorrichtung vorgesehen ist, mit dem das Magazin in Bezug auf die Aufnahme höhenverfahrbar ist. Grundsätzlich ist auch eine Verfahrbarkeit in anderer Richtung denkbar, wenn die Fächeranordnung innerhalb des Magazins entsprechend anders ausgebildet ist. Die Übereinanderanordnung und Höhenverfahrbarkeit ist insbesondere dann von Vorteil, wenn die Flüssigkeitsträger eine ausgeprägte Flachseite aufweisen und etwa horizontal mit dieser Flachseite in der Aufnahme angeordnet sind, also eine Durchstrahlung von oben nach unten oder bevorzugt umgekehrt erfolgt.

Alternativ kann das Magazin trommelförmig ausgebildet sein, wobei die Trommel drehbar innerhalb der Vorrichtung gelagert ist und durch Drehen der Trommel ein Magazinfach in Flucht zur Aufnahme bringbar ist. Diese Anordnung hat den Vorteil, dass statt eines Linearantriebs ein Rotationsantrieb Verwendung finden kann, jedoch baut die Trommel volumenmäßig konstruktionsbedingt stets größer als ein Magazin mit nebeneinander oder übereinander angeordneten Fächern.

Alternativ kann gemäß einer Weiterbildung der Erfindung das Magazin auch durch eine Reihe nebeneinander angeordneter Fächer gebildet sein. Dabei ist es vorteilhaft, wenn diese jeweils zur Aufnahme eines Flüssigkeitsträgers ausgebildeten Fächer kettenartig miteinander verbunden sind, sodass sie entsprechend durch die Vorrichtung hindurch geführt oder ggf. an einer oder beiden Seiten aufgewickelt oder gestapelt werden können.

Zum Überführen eines Flüssigkeitsträgers vom Fach in die Aufnahme und umgekehrt ist es besonders vorteilhaft, einen Linearantrieb vorzusehen, mit dem der Träger in Einschubrichtung und Gegenrichtung verfahrbar ist, wie dies weiter unten beschrieben ist.

Vorteilhaft sind dabei Formschlussmittel am Flüssigkeitsträger vorgesehen, die mit entsprechenden Formschlussmitteln am Manipulator in Eingriff bringbar sind, sodass keine gesonderten Greifwerkzeuge oder dergleichen erforderlich sind, um den Manipulator mit dem jeweiligen Flüssigkeitsträger zu verbinden.

Gemäß einer vorteilhaften Weiterbildung der Erfindung weist der Flüssigkeitsträger an zwei Schmalseiten Ausnehmungen auf. Der Manipulator ist als U-förmiger Bügel ausgebildet und weist zwischen seinen Schenkeln nach innen weisende Vorsprünge auf, die zur Aufnahme in den Ausnehmungen vorgesehen sind. Sobald diese Vorsprünge formschlüssig in den Ausnehmungen liegen, kann der Flüssigkeitsträger in die Aufnahme sowie in Gegenrichtung mittels des Manipulators verschoben werden, ohne dass gesonderte Greifmittel hierfür erforderlich sind.

Um eine gute Handhabung des Magazins außerhalb der Vorrichtung zu gewährleisten, ohne dass die Gefahr besteht, dass Flüssigkeitsträger herausfallen, ist das Magazin gemäß der Erfindung so ausgebildet, dass die Fächer zu drei benachbarten Schmalseiten zumindest abschnittsweise offen und im Übrigen geschlossen ausgebildet sind, wobei die Flüssigkeitsträger die Fächer an zwei gegenüberliegend abgewandten Schmalseiten überragen, sodass die Formschlussmittel des Manipulators hier eingreifen können und auf diese Weise den jeweiligen Flüssigkeitsträger vom Magazin in die Aufnahme oder in umgekehrter Richtung bewegen können.

Mit den vorbeschriebenen Ausbildungen zum Wechsel des Flüssigkeitsträgers kann nicht nur sichergestellt werden, dass der Flüssigkeitsträger bei Bedarf gegen einen anderen, sauberen Flüssigkeitsträger ausgetauscht werden kann, sondern es kann dieser ggf. auch zur weiteren Aufbewahrung der Flüssigkeitsprobe genutzt werden. Wenn beispielsweise die Vorrichtung zur Trinkwasserüberwachung eingesetzt wird und der Flüssigkeitsträger in regelmäßigen Abständen mit neuer Flüssigkeit gefüllt wird, die zu untersuchen ist, dann kann, wenn die Untersuchung beispielsweise ergibt, dass die im Träger befindliche Flüssigkeit den Anforderungen an die Trinkwasserqualität nicht entspricht, der Flüssigkeitsträger mit der darin befindlichen Flüssigkeit ausgetauscht und somit die darin befindliche Flüssigkeit für weitere Untersuchungen gesichert werden. Alternativ ist es gemäß einer Weiterbildung der Erfindung möglich, für diesen Fall eine Probenentnahme innerhalb der Vorrichtung vorzusehen, also den Flüssigkeitsträger nicht über den üblichen Weg zu entleeren, sondern die darin befindliche Flüssigkeit in ein gesondertes Probengefäß zu leiten. Insbesondere ist es dann möglich, in den Flüssigkeitsträger einen weiteren Flüssigkeitsausgang einzubauen, der z. B. bei einem Alarm verwendet wird.

Die Mittel zum Reinigen, die beschrieben worden sind, können im Bereich des Rahmengestells angebracht werden. Sie können aber auch innerhalb des Magazins angebracht sein und dort Reinigungen an schon gebrauchten Flüssigkeitsträgern durchführen. Nach der Reinigung können die Flüssigkeitsträger wiederverwendet werden.

Die Erfindung ist nachfolgend anhand von in der Zeichnung dargestellten Ausführungsbeispielen näher erläutert. Es zeigen:
- Fig. 1: in stark vereinfachter perspektivischer Darstellung eine Untersuchungsvorrichtung mit einem Magazin und drei Flüssigkeitsträgern,
- Fig. 2: das mit Flüssigkeitsträgern gefüllte Magazin in der Vorrichtung nach Fig. 1 in einer ersten Stellung, in welcher das Magazin auswechselbar ist,
- Fig. 3: die Vorrichtung gemäß Fig. 1 in einer zweiten Stellung, in welcher ein Flüssigkeitsträger im Magazin zur Überführung in eine Aufnahme der Vorrichtung vorbereitet ist,
- Fig. 4: einen Flüssigkeitsträger in überführter Position innerhalb der Aufnahme, alle Darstellungen schematisiert und perspektivisch entsprechend Fig. 1,
- Fig. 5: in stark vereinfachter Darstellung eine alternative Ausgestaltung eines Magazins,
- Fig. 6: eine weitere Alternative zum Zuführen von Flüssigkeitsträgern,
- Fig. 7: in vereinfachter Explosionsdarstellung den Aufbau eines alternativen Flüssigkeitsträgers,
- Fig. 8: in stark vereinfachter perspektivischer Darstellung eine Anordnung zum Wechseln der durchsichtigen Wände des Flüssigkeitsträgers gemäß Fig. 7 und
- Fig. 9: eine alternative Ausführung zum Wechseln in Darstellung entsprechend Fig. 8.

Der grundsätzliche Aufbau der in der Vorrichtung dargestellten Untersuchungsvorrichtung zählt zum Stand der Technik, es wird in diesem Zusammenhang auf EP 2 469 264 A1 und WO 2014/094790 A1 verwiesen, wo das Untersuchungsverfahren als solches und der Aufbau beschrieben ist.

Die Vorrichtung zur Durchstrahlungsuntersuchung einer Flüssigkeit weist eine Lichtquelle 1 auf, die über einen U-förmigen Bügel 2 mit einem CCD-Sensor 3 verbunden ist, wobei der Bügel 2 an einer Schiene motorisch verfahrbar ist, sodass ein zwischen Lichtquelle 1 und CCD-Sensor 3 angeordnetes Fenster 4 eines Flüssigkeitsträgers 5 schrittweise untersucht werden kann, wobei eine Vielzahl von Einzelfotos getätigt werden und diese Reihen von Fotos elektronisch ausgewertet werden, um festzustellen, welche Anzahl und Art von Partikeln in der in dem Flüssigkeitsträger 5 befindlichen Flüssigkeitsprobe enthalten sind. Die Durchstrahlung des Fensters 4 erfolgt in einem Winkel etwa 6° zur Senkrechten, so wie dies aus WO 2014/094790 A1 an sich bekannt ist, auf die verwiesen wird.

Der Flüssigkeitsträger 5, der den eigentlichen Probenträger bildet und der zum Zwecke des Austausches der Flüssigkeit durchströmbar ist, ist in einem Rahmengestell 6 der Vorrichtung aufgenommen, welches an einer Längsseite eine schlitzförmige Ausnehmung 7 aufweist, über welche die eigentliche Aufnahme 8 für den Flüssigkeitsträger 5 innerhalb des Rahmengestells zugänglich ist. Ein Flüssigkeitsträger 5 kann durch die Ausnehmung 7 in das Rahmengestell 6 eingeführt und somit in die innerhalb des Rahmengestells 6 gebildete Aufnahme 8 verbracht werden. In dieser Position liegt das Fenster 4 des Flüssigkeitsträgers 5 zwischen Lichtquelle 1 und CCD-Sensor 3, wie dies an sich zum Stand der Technik zählt.

Ein Flüssigkeitsträger 5 hat eine im Wesentlichen quaderförmige Form, wobei der Quader eine Längserstreckung aufweist, die ein Mehrfaches seiner Quererstreckung entspricht, wobei die Quererstreckung wiederum einem Mehrfachen seiner Erstreckung in Höhenrichtung entspricht, sodass sich eine im Wesentlichen tafelförmige Ausbildung ergibt. Der Flüssigkeitsträger 5 weist zwei Anschlüsse 9 auf, über welche dieser mit entsprechenden Anschlüssen innerhalb der Aufnahme 8 verbunden ist, über welche die zu untersuchende Flüssigkeit, aber auch Reinigungsflüssigkeit, in den Träger 5 zu- bzw. abgeführt werden kann. Zwischen den Anschlüssen 9 ist ein langgestreckter Kanal 10 gebildet, der an der Ober- und der Unterseite durch eine durchsichtige Scheibe 11 abgedeckt ist. Der zwischen den Scheiben 11 gebildete Kanal 10 bildet das eigentliche Fenster 4, durch welches die optische Untersuchung der im Flüssigkeitsträger 5 befindlichen Flüssigkeit erfolgt.

In den Schmalseiten des Flüssigkeitsträgers 5 sind mittig rechteckige Ausnehmungen 12 vorgesehen, welche zum Formschluss mit einem Manipulator 13 dienen, welcher einen U-förmigen Bügel 14 aufweist, der mittels eines Linearantriebs 15 in die Richtungen 16 verfahrbar ist, um den Bügel 14 durch die Ausnehmung 7 in die Aufnahme 8 einzuführen bzw. aus dieser herauszuführen. An den Enden der Schenkel des Bügels 14 ist jeweils an der Innenseite ein rechteckiger Vorsprung 17 vorgesehen. Diese Vorsprünge 17 sind zum Eingriff in Ausnehmungen 12 des Flüssigkeitsträgers 5 vorgesehen, um diese Bauteile formschlüssig in den Richtungen 16 miteinander zu verbinden und so das Einfahren und das Ausfahren des Flüssigkeitsträgers 5 in bzw. aus der Aufnahme 8 mittels des Linearantriebs 15 zu ermöglichen.

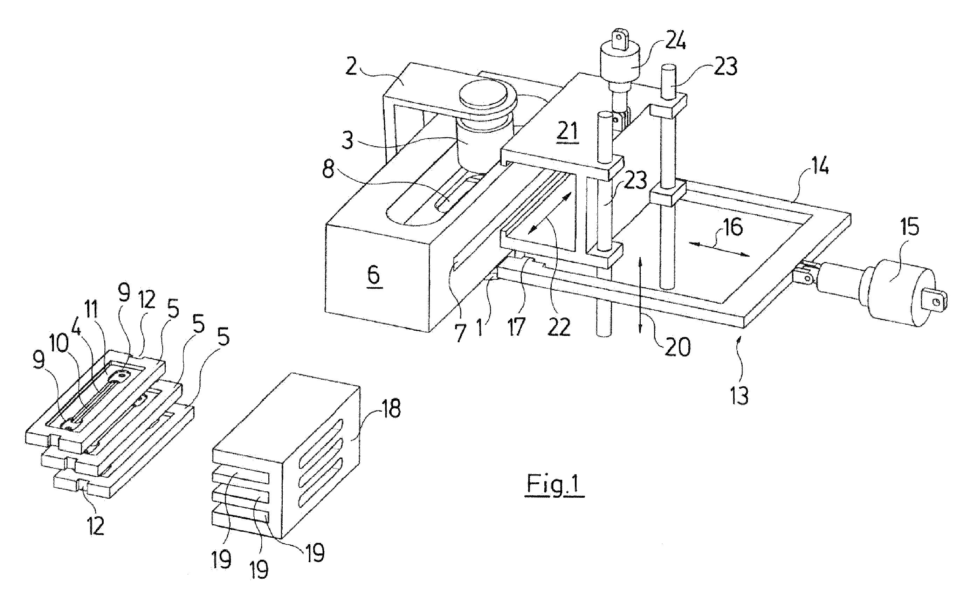

In den Figuren 1 bis 4 sind drei Flüssigkeitsträger 5 dargestellt, die in einem Magazin 18 aufgenommen werden können. Es versteht sich, dass dies nur beispielhaft zu verstehen ist und dass grundsätzlich eine beliebige Anzahl von Flüssigkeitsträgern 5 in einem Magazin aufgenommen sein kann. Das Magazin 18 weist hierzu drei an drei Seiten offene Fächer 19 auf. In seiner Längserstreckung ist das Magazin 18 kürzer als die Flüssigkeitsträger 5 in ihrer Längserstreckung sind, sodass beim Einsatz der Flüssigkeitsträger 5 in das Magazin 18 diese seitlich vorstehen, derart, dass die Ausnehmungen 12 frei zugänglich sind, sodass durch Verfahren des Magazins 18 in vertikaler, also in Höhenrichtung 20, der Bügel 14 mit seinen Vorsprüngen 17 in formschlüssige Verbindung mit den Ausnehmungen 12 eines Flüssigkeitsträgers 5 bringbar ist.

Das Magazin 18 selbst sitzt in einer Halterung 21, welche ein seitliches Ein- und Herausführen des Magazins 18 in den Richtungen 22 quer zur Richtung 16 ermöglicht. In allen anderen Richtungen ist das Magazin 18 formschlüssig innerhalb der Halterung 21 aufgenommen. Zum Rahmengestell 6 hin ist die Halterung 21 teilweise offen, derart, dass einerseits das Magazin 18 gehalten wird, andererseits jedoch die Flüssigkeitsträger 15 aus den Fächern 19 heraus- bzw. in umgekehrter Richtung wieder hereingefahren werden können. Die Halterung 21 ist an zwei Führungsstangen 23 beweglich geführt. Ein Linearantrieb 24 ist an der Halterung 21 einerseits und in einem nicht dargestellten Maschinengestell der Vorrichtung andererseits befestigt und bewegt die Halterung 21 in vertikalen Richtungen 20.

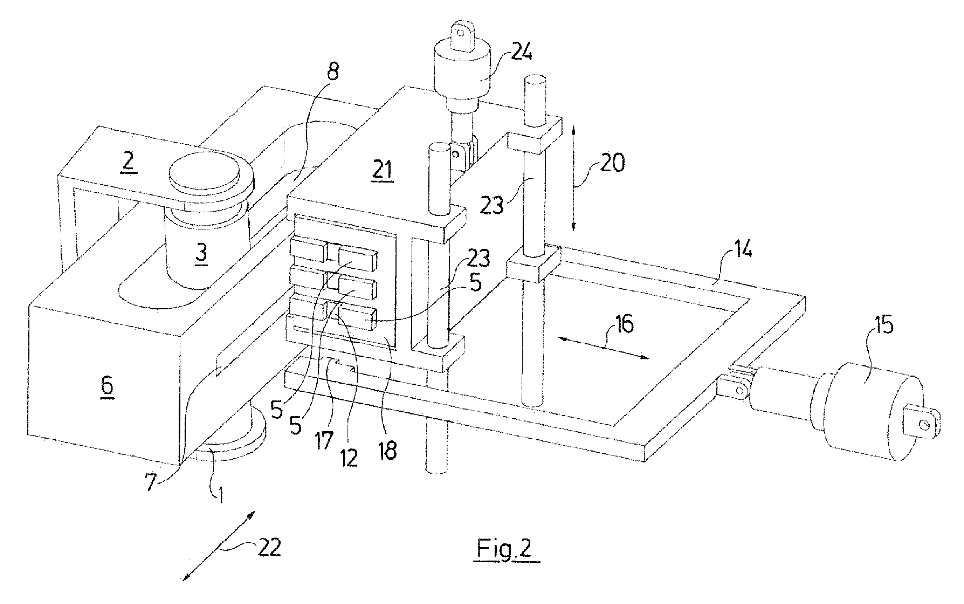

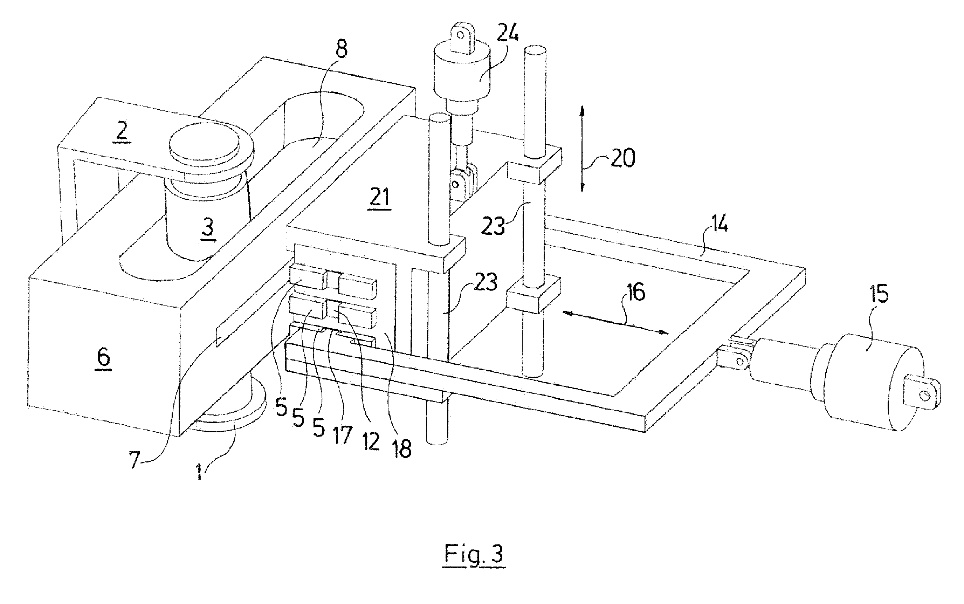

Ausgehend von der Ausgangsposition, wie sie in Fig. 1 dargestellt ist, in welcher die Flüssigkeitsträger 5 und das Magazin 18 außerhalb der Vorrichtung angeordnet sind, wird zunächst das Magazin 18 befüllt, indem die entsprechende Anzahl, hier drei Flüssigkeitsträger 5, in die zugehörigen Fächer 19 des Magazins 18 eingeführt werden. Sodann wird das Magazin 18 mit den darin befindlichen Flüssigkeitsträgern 5 von der Seite in Richtung 22 in die Halterung 21 eingeschoben, sodass sich die in Fig. 2 dargestellte Stellung ergibt, in welcher das Magazin 18 oberhalb der Ausnehmung 7 im Rahmengestell 6 vor diesem angeordnet ist. Der Bügel 14 des Manipulators 13 ist so positioniert, dass die Halterung 21 mit dem darin befindlichen Magazin 18 und den darin befindlichen Flüssigkeitsträgern 5 in den Richtungen 20 nach oben bzw. nach unten verfahren werden kann, wobei die Ausnehmungen 12 mit den Vorsprüngen 17 fluchten, sodass wahlweise eines der drei Flüssigkeitsträger 5 in Eingriff mit dem Bügel 14 gebracht werden kann, so wie dies in Fig. 3 für den im untersten Fach 19 des Magazins 18 angeordneten Flüssigkeitsträger 5 dargestellt ist. Sobald der Linearantrieb 24 die Halterung 21 in diese Höhe verfahren hat, kann mittels des Linearantriebes 15 des Manipulators 13 der Bügel 14 in die Richtungen 16 verfahren werden, sodass der im unteren Fach 19 befindliche Flüssigkeitsträger 15, der nun fluchtend zur Ausnehmung 7 angeordnet ist, aus dem Fach 19 heraus durch die Ausnehmung 7 in die Aufnahme 8 geschoben werden kann.

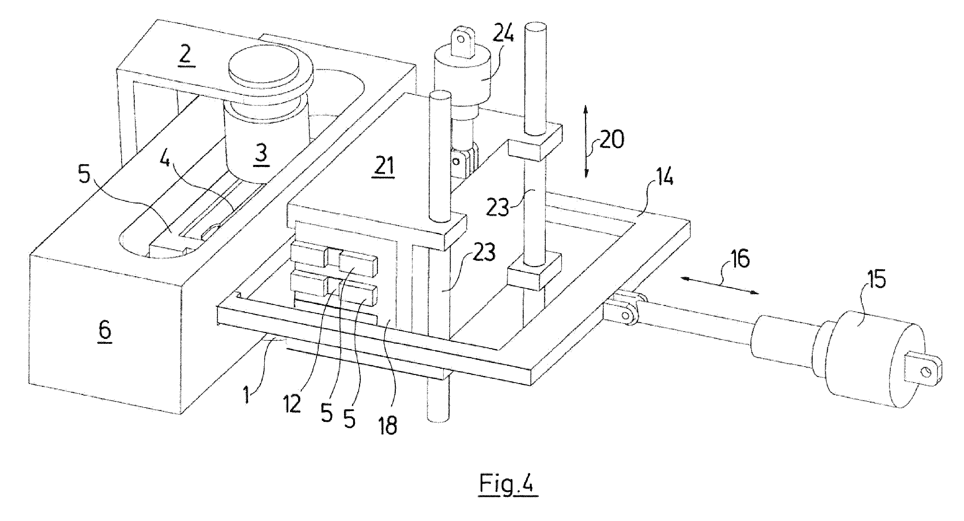

In dieser Stellung (Fig. 4) befindet sich nun der Flüssigkeitsträger 5 in der bestimmungsgemäßen Position innerhalb der Aufnahme 8, in welcher die Anschlüsse 9 mit den entsprechenden Leitungsanschlüssen der Aufnahme 8 verbunden sind und durch das Fenster 4 die Analyse der im Kanal 10 befindlichen Flüssigkeit erfolgen kann. Der Flüssigkeitsaustausch im Flüssigkeitsträger 5 erfolgt in an sich bekannter Weise durch entsprechende Ventilsteuerung innerhalb der Vorrichtung ggf. mittels einer Förderpumpe. Dabei wird mittels der Auswertelektronik nicht nur Anzahl und Größe der durch das Fenster 4 erfassten Partikel ermittelt, sondern auch der Verschmutzungsgrad des Fensters, wobei bei Überschreiten eines vorgegebenen Verschmutzungsgrades, sei es weil die vom CCD-Sensor aufgenommene Lichtmenge eine vorbestimmte Menge unterschreitet oder weil von der Auswertelektronik eine unzulässig hohe Anzahl von zur Auswertung nicht geeigneten Bildabschnitten ermittelt worden ist, wird ein Reinigungsvorgang eingeleitet.

Wie eine solche Reinigung im Einzelnen ausgebildet sein kann, ist einleitend beschrieben und hier nicht im Einzelnen dargestellt. Ein solcher Reinigungsvorgang wird in Zeitabständen wiederholt, bis irgendwann die gewünschte Reinigungswirkung nicht mehr erreicht werden kann und ein Wechsel des Flüssigkeitsträges 5 erforderlich ist. Dann wird mittels des Linearantriebs 15 zunächst der in der Aufnahme 8 befindliche Flüssigkeitsträger 5 durch die Ausnehmung 7 herausgezogen und in das dazu fluchtend angeordnete und nun leerstehende Fach 19 des Magazins 18 verbracht. Sodann wird mittels des Linearantriebs 24 die Halterung 21 nach unten verfahren, bis der folgende Flüssigkeitsträger 5, hier der im mittleren Fach 19 befindliche Flüssigkeitsträger 5 fluchtend zur Ausnehmung 7 angeordnet ist. Dieser ist dann formschlüssig über seine Ausnehmungen 12 mit den Vorsprüngen 17 des Bügels 14 verbunden und kann über den Linearantrieb 15 in die Aufnahme 8 überführt werden, wie dies weiter oben für den im untersten Fach 19 angeordneten Flüssigkeitsträger 5 beschrieben worden ist. Dieses Verfahren kann wiederholt werden, bis sämtliche Flüssigkeitsträger 5 verbraucht, d. h. insbesondere verschmutzt sind, wonach das Magazin 18 aus der Halterung 21 entfernt und durch ein mit neuen oder gereinigten Flüssigkeitsträgern 5 gefülltes Magazin 18 ersetzt wird.

Es versteht sich, dass die vorbeschriebene Wechselvorrichtung ggf. auch zur Probeentnahme und Speicherung dienen kann, wenn beispielsweise in dem Fenster 4 eine Abnormität oder eine unzulässig hohe Konzentration bestimmter Partikel erfasst wird. Dann kann dieser Probenträger 5 mit der darin befindlichen Flüssigkeit aus der Aufnahme 8 entfernt und in das entsprechende Fach 19 des Magazins verbracht werden, wo es später einer weiteren Verwendung (z. B. Analyse oder Dokumentation) zugeführt werden kann.

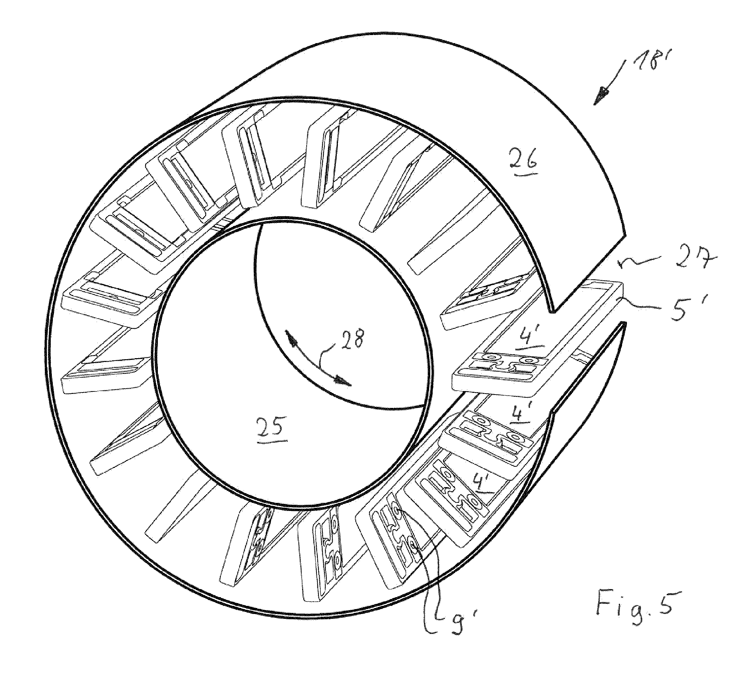

Eine alternative Ausführung des Magazins 18 ist anhand von Fig. 5 dargestellt. Das dort dargestellte Magazin 18' ist als Trommel ausgebildet und weist einen rohrförmigen Träger 25 auf sowie eine dazu mit Abstand angeordnete Wand 26 mit einer Ausnehmung 27, die im Betrieb fluchtend zur Ausnehmung 7 der Vorrichtung angeordnet ist. An dem rohrförmigen Träger 25 sind Flüssigkeitsträger 5' gelagert, die sich von den vorbeschriebenen Flüssigkeitsträgern 5 im Wesentlichen dadurch unterscheiden, dass die Anschlüsse 9 an einer Seite nebeneinander angeordnet sind, sodass der darin verlaufende (nicht dargestellte) Kanal den Träger 5 in Längsrichtung zweimal durchläuft und um 180° am Ende umgelenkt ist. Das Fenster 4' umfasst somit zwei nebeneinander laufende Kanalabschnitte. Das Magazin 18' ist in eine oder beide Richtungen 28 drehbar angeordnet, anstelle der Höhenverfahrbarkeit des Magazins 18 in Richtungen 20. Durch Verfahren des Magazins 18' um die Drehachse 28 gelangt einer der hier beispielhaft 17 Flüssigkeitsträger 5' in Flucht zur Ausnehmung 7 und damit zur Aufnahme 8 der Vorrichtung und kann mittels eines entsprechend angepassten Manipulators aus dem Magazin 18' in die Aufnahme 8 verschoben bzw. aus dieser zurück in das Magazin 18' verschoben werden. Das Magazin 18' kann auch mit Flüssigkeitsträgern 5 oder anderen geeigneten Flüssigkeitsträgern bestückt sein, es soll hier lediglich verdeutlicht werden, dass auch der Aufbau des Flüssigkeitsträgers in weiten Grenzen variierbar ist. So kann z. B. der Flüssigkeitsträger 4' auch axial aus dem Magazin 18' in die Ausnehmung 7 geschoben werden.

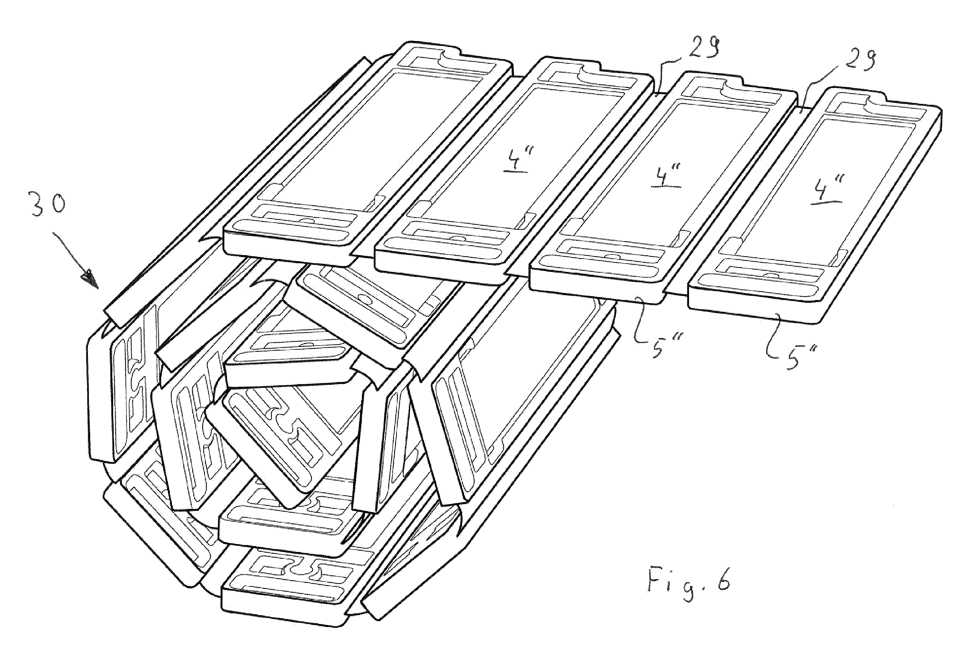

Anhand von Fig. 6 ist beispielhaft dargestellt, wie Flüssigkeitsträger 5" nach Art einer Kette mit ihren Längsseiten mit geringem Abstand nebeneinander angeordnet sind. Dabei sind benachbarte Flüssigkeitsträger 5" an ihren Längsseiten über ein Filmscharnier 29 miteinander verbunden, welches den Abstand benachbarter Flüssigkeitsträger 5" zueinander definiert, jedoch diese flexibel zueinander anordnet, sodass sie zu einem Wickel 30 aufgewickelt werden können und so platzsparend in der Vorrichtung untergebracht werden können. Ein solcher Wickel 30 kann lose in einem Vorratsbehältnis vor der Ausnehmung 7 des Rahmengestells 6 angeordnet werden. Die Zuführung kann entweder durch einen entsprechend angepassten Manipulator oder durch ein geeignetes Fördersystem erfolgen. Um einen verunreinigten Flüssigkeitsträger 5" aus der Vorrichtung zu entfernen, insbesondere aus der Aufnahme 8 zu entfernen, kann ein entsprechendes Auffangbehältnis auf der gegenüberliegend abgewandten Seite zur Ausnehmung 7 des Rahmengestells 6 angeordnet sein, wobei der Bügel 2 entsprechend anzupassen ist oder eine alternative Führung von Lichtquelle 1 und CCD-Sensor 3 innerhalb der Vorrichtung vorzusehen ist. Auch kann ein Ausstoß eines Flüssigkeitsträgers 5" über die Stirnseite des Rahmengestells 6 vorgesehen sein, wenn eine Schneidvorrichtung vorgesehen ist, welche zuvor das Filmscharnier 29, mit welchem der in der Aufnahme 8 befindliche Probenträger 5" mit dem Wickel 30 verbunden ist, durchtrennt.

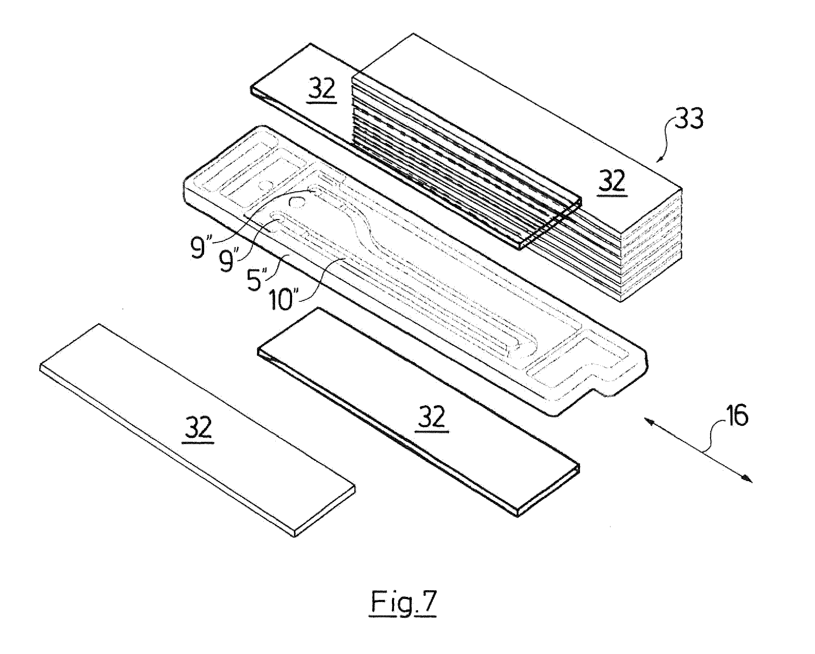

Der Flüssigkeitsträger 5", dessen Aufbau im Einzelnen anhand von Fig. 7 dargestellt ist, kann alternativ auch einer Vorrichtung zugeführt werden, bei welcher der Flüssigkeitsträger 5" nicht mit seiner Längsseite, sondern mit seiner Schmalseite in die Vorrichtung eingeführt wird, wenn eine entsprechende Schneidvorrichtung vorgesehen ist, welche vor Einführen des Trägers 5" das zugehörige Filmscharnier 29 zum Wickel 30 auftrennt. Eine solche Vorrichtung ist beispielsweise in der europäischen Patentanmeldung 14 186 884.4 der Anmelderin beschrieben, auf die insoweit verwiesen wird. Auch der Aufbau des Probenträgers 5" ist dort im Einzelnen angegeben.

Die Richtungen zum Einschub und Auszug des Probenträgers 5" aus der Vorrichtung, die analog zu den vorbeschriebenen Ausführungsbeispielen mit 16 angegeben sind, verlaufen hier in Längsrichtung und nicht in Querrichtung des Trägers 5". Der Flüssigkeits- bzw. Probenträger 5" selbst weist einen aus Kunststoffspritzguss gebildeten Rahmen 31 auf, in welchem der vorbeschriebene Kanal 10" ausgebildet ist, der sich von den Anschlüssen 9" zwischen diesen in Längsrichtung des Rahmens 31 und am Ende um 180° umgelenkt erstreckt. An der Ober-und Unterseite abgeschlossen wird der Rahmen 31 durch je eine Scheibe 32, die zusammen mit dem Kanal 10" das Fenster 4" bildet.

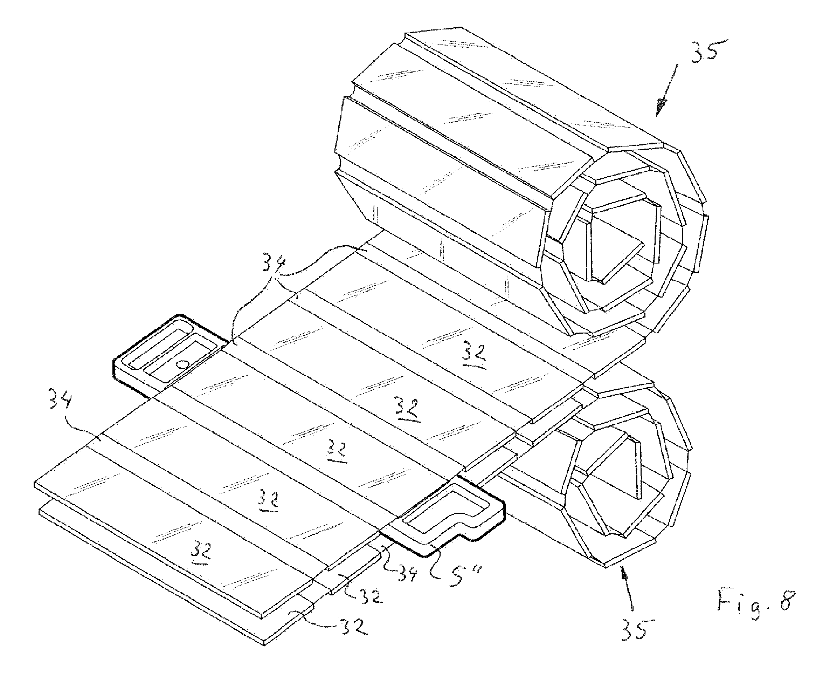

In Fig. 7 ist ein Stapel 33 von Scheiben 32 dargestellt, der verdeutlichen soll, dass gemäß der Erfindung vorgesehen sein kann, nicht den Probenträger (hier den Flüssigkeitsträger) als solchen, sondern lediglich die Scheiben 32, also die durchsichtigen Wände des Flüssigkeitsträgers 5" zu wechseln. Anhand von Fig. 8 ist dargestellt, wie ein solcher Scheibenwechsel automatisiert vonstattengehen kann, wenn beispielsweise der Flüssigkeitsträger 5" innerhalb der Vorrichtung befindlich ist.

Bei der anhand von Fig. 8 dargestellten Ausführung sind die Scheiben 32 über elastische Abschnitte 34 miteinander verbunden, sodass sie zu einem Wickel 35 aufwickelbar sind, der platzsparend innerhalb der Vorrichtung untergebracht werden kann. Dabei sind, wie Fig. 8 verdeutlicht, zwei Wickel 35 vorgesehen, einer für die Scheibe 32 an der Unterseite und einer für die Scheibe 32 an der Oberseite. Die in Fig. 8 vor dem Flüssigkeitsträgers 5" angeordneten beiden Scheibenpaare sind bereits ausgetauscht und verbraucht. Diese können ebenfalls innerhalb der Vorrichtung zu einem Wickel aufgerollt werden, es ist jedoch auch denkbar, diese im Bereich der elastischen Abschnitte 34 abzutrennen und in einem Sammelbehälter aufzufangen oder in sonstiger Weise dem Recycling zuzuführen.

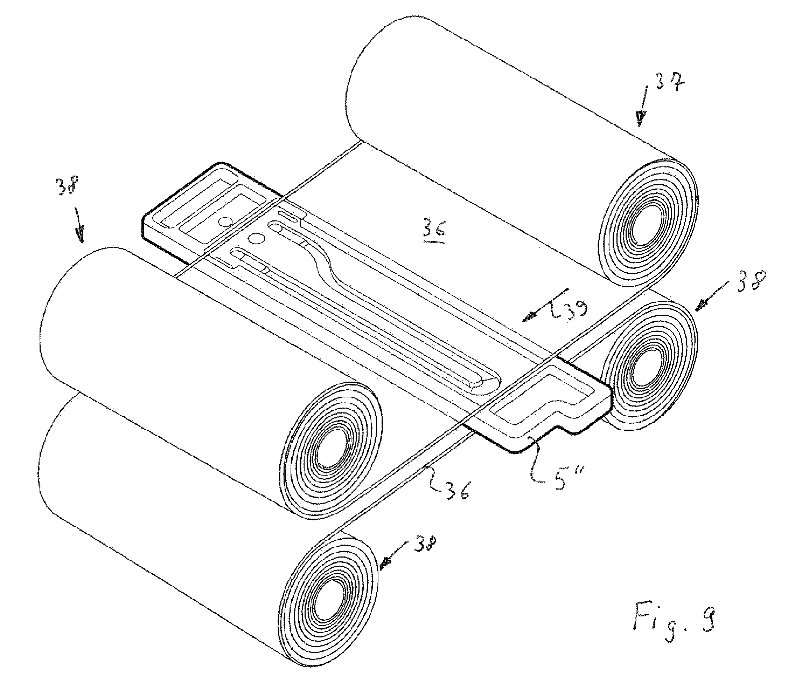

Bei der anhand von Fig. 9 dargestellten Ausführungsvariante weist das Fenster Abschnitte von durchsichtigen Wandungen 36 auf, die so elastisch sind, dass sie zu beiden Seiten des Flüssigkeitsträgers 5" zu Rollen aufgerollt sind. Durch einen geeigneten Antrieb können die entsprechenden innerhalb des Flüssigkeitsträgers 5" angeordneten Wandungsabschnitte ausgetauscht werden, indem die Rollen 37 und 38 entsprechenden angetrieben werden. Dabei sind die unverbrauchten sauberen Wandungsabschnitte auf den Rollen 37 aufgewickelt, wohingegen die verbrauchten Wandungsabschnitte auf den Rollen 38 aufgewickelt sind. Zum Wechsel des Wandungsabschnittes wird die Wandung 36 in Richtung 39 bewegt, bis ein neuer Wandungsabschnitt von der Rolle 37 innerhalb des Probenträgers 5" angeordnet ist und der dort zuvor dort angeordnete Wandungsabschnitt auf der Rolle 38 aufgerollt ist. Dies erfolgt analog an der Unter- und der Oberseite des Flüssigkeitsträgers 5".

### Bezugszeichenliste

- 1: - Lichtquelle
- 2: - Bügel
- 3: - CCD-Sensor
- 4: - Fenster
- 4': - Fenster in Fig. 5
- 4": - Fenster in den Fig. 6 - 9
- 5: - Flüssigkeitsträger
- 5': - Flüssigkeitsträger in Fig. 5
- 5": - Flüssigkeitsträger in den Fig. 6 - 9
- 6: - Rahmengestell
- 7: - Ausnehmung in 6
- 8: - Aufnahme für den Flüssigkeitsträger
- 9: - Anschlüsse im Flüssigkeitsträger
- 9': - Anschlüsse im Flüssigkeitsträger 5' in Fig. 5
- 9": - Anschlüsse im Flüssigkeitsträger 5" in Fig. 6 - 9
- 10: - Kanal im Flüssigkeitsträger
- 10": - Kanal im Flüssigkeitsträger 5" in Fig. 6 - 9
- 11: - Scheiben im Flüssigkeitsträger
- 12: - Ausnehmungen im Flüssigkeitsträger
- 13: - Manipulator
- 14: - Bügel
- 15: - Linearantrieb
- 16: - Richtungen, in denen der Bügel 14 verfahrbar ist
- 17: - Vorsprünge am Bügel
- 18: - Magazin
- 18': - Magazin in Fig. 5
- 19: - Fächer des Magazins
- 20: - Richtungen, in denen das Magazin verfahrbar ist
- 21: - Halterung für das Magazin
- 22: - Richtungen, in denen das Magazin in die Halterung einführbar bzw. ausführbar ist
- 23: - Führungsstangen
- 24: - Linearantrieb für die Halterung 21
- 25: - rohrförmiger Träger
- 26: - Wand
- 27: - Ausnehmung
- 28: - Richtungen
- 29: - Filmscharnier
- 30: - Wickel
- 31: - Rahmen
- 32: - Scheibe
- 33: - Stapel
- 34: - elastische Abschnitte
- 35: - Wickel
- 36: - Wandung
- 37: - Rolle
- 38: - Rolle
- 39: - Richtung

## Patentansprüche

1. Vorrichtung zur durchstrahlenden Untersuchung einer Flüssigkeit, bei der die zu untersuchende Flüssigkeit in einem Flüssigkeitsträger (5) mit einem Fenster (4) angeordnet ist, wobei zu einer Seite des Fensters (4) eine Strahlungsquelle (1) und zur anderen Seite des Fensters (4) ein Empfänger (3) angeordnet und eine Auswertelektronik zur Auswertung des Empfängersignals vorgesehen ist, **dadurch gekennzeichnet, dass** Mittel zum Reinigen des Fensters (4) und/oder zum Wechsel des Fensters (4) oder des Flüssigkeitsträgers (5) vorgesehen sind.

2. Vorrichtung nach Anspruch 1, **dadurch gekennzeichnet, dass** Mittel vorgesehen sind, welche den Verschmutzungsgrad des Fensters (4) selbsttätig erfassen und bei Erreichen eines vorbestimmten Verschmutzungsgrads einen Reinigungs- oder Wechselvorgang einleiten.

3. Vorrichtung nach Anspruch 1 oder 2, **dadurch gekennzeichnet, dass** die Reinigung mittels Ultraschalls erfolgt und mindestens ein Ultraschallerzeuger vorgesehen ist, der mit dem Fenster (4) schwingungsgekoppelt oder schwingungskoppelbar ist.

4. Vorrichtung nach einem der Ansprüche 1 bis 3, **dadurch gekennzeichnet, dass** zur Reinigung mechanische Mittel mindestens an der Innenseite des Fensters (4) vorgesehen sind.

5. Vorrichtung nach einem der vorhergehenden Ansprüche, **dadurch gekennzeichnet, dass** zur Reinigung mindestens eine UV-Lichtquelle vorgesehen ist, mit welcher zumindest der Bereich des Fensters (4) bestrahlbar ist.

6. Vorrichtung nach einem der vorhergehenden Ansprüche, **dadurch gekennzeichnet, dass** zur Reinigung Heizmittel vorgesehen sind, mit denen zumindest der Bereich des Fensters (4) aufheizbar ist.

7. Vorrichtung nach einem der vorhergehenden Ansprüche, **dadurch gekennzeichnet, dass** zur Reinigung Mittel zum Durchspülen des Flüssigkeitsträgers (5) mit einem flüssigen oder gasförmigen Reinigungsmittel vorgesehen sind.

8. Vorrichtung nach einem der vorhergehenden Ansprüche, **dadurch gekennzeichnet, dass** der Flüssigkeitsträger (5") im Bereich des Fensters (4") an zwei Seiten durch je einen durchstrahlbaren Wandungsabschnitt abgeschlossen ist, wobei zwischen den Wandungsabschnitten die zu untersuchende Flüssigkeit angeordnet ist, und dass die Wandungsabschnitte Teil mindestens einer Wandung (36) sind, die zum Zwecke des Austausches eines Wandungsabschnittes relativ zum Flüssigkeitsträger (5") bewegbar ist.

9. Vorrichtung nach Anspruch 8, **dadurch gekennzeichnet, dass** die Wandungsabschnitte in einer Reihe nebeneinander angeordnet sind und die Wandung (36) streifenförmig ausgebildet und vorzugsweise aufgerollt innerhalb der Vorrichtung angeordnet ist.

10. Vorrichtung nach einem der vorhergehenden Ansprüche, **dadurch gekennzeichnet, dass** der Flüssigkeitsträger (5) in einer Aufnahme (8) der Vorrichtung angeordnet ist und dass die Vorrichtung ein Magazin (18) mit mehreren Flüssigkeitsträgern (5) aufweist, wobei eine Wechselmechanik vorgesehen ist, mit der der Flüssigkeitsträger (5) aus der Aufnahme (8) entfernt und durch einen Flüssigkeitsträger (5) aus dem Magazin (18) ersetzt werden kann.

11. Vorrichtung nach Anspruch 10, **dadurch gekennzeichnet, dass** das Magazin (18, 18') mindestens einseitig offen ausgebildet und verfahrbar ausgebildet ist, derart, dass jeder der innerhalb des Magazins (18, 18') angeordneten Flüssigkeitsträger (5) in Flucht zur Aufnahme (8) bringbar ist.

12. Vorrichtung nach Anspruch 10 oder 11, **dadurch gekennzeichnet, dass** in dem Magazin (18) mehrere Flüssigkeitsträger (5) in Fächern (19) übereinander angeordnet sind und dass ein Linearantrieb (24) vorgesehen ist, mit dem das Magazin (18) in Bezug auf die Aufnahme (8) höhenverfahrbar ist.

13. Vorrichtung nach Anspruch 10 oder 11, **dadurch gekennzeichnet, dass** das Magazin (18') trommelförmig ausgebildet ist, wobei die Trommel (18') drehbar gelagert und durch Drehen der Trommel (18') ein Magazinfach in Flucht zur Aufnahme (8) bringbar ist.

14. Vorrichtung nach einem der vorhergehenden Ansprüche, **dadurch gekennzeichnet, dass** das Magazin durch eine Reihe (30) nebeneinander angeordneter Fächer gebildet ist, die jeweils zur Aufnahme eines Flüssigkeitsträgers (5") ausgebildet und kettenartig miteinander verbunden sind (Fig. 6).

15. Vorrichtung nach einem der Ansprüche 10 bis 14, **dadurch gekennzeichnet, dass** ein Manipulator (13) vorgesehen ist, welcher mittels eines Linearantriebs (15) verfahrbar ist und mit dem ein Flüssigkeitsträger (5) vom Magazin (18) in die Aufnahme (8) und aus der Aufnahme (8) verbringbar ist.

16. Vorrichtung nach Anspruch 13, **dadurch gekennzeichnet, dass** Formschlussmittel (12) am Flüssigkeitsträger (5) vorgesehen sind, die mit entsprechenden Formschlussmitteln (17) am Manipulator (13) in Eingriff bringbar sind.

17. Vorrichtung nach Anspruch 15, **dadurch gekennzeichnet, dass** der Flüssigkeitsträger (5) an zwei Schmalseiten mit Ausnehmungen (12) versehen ist und dass der Manipulator (13) einen U-förmigen Bügel (14) aufweist, der nahe seinen Schenkelenden nach innen weisende Vorsprünge (17) aufweist, die zur Aufnahme in die Ausnehmungen (12) vorgesehen sind.

18. Vorrichtung nach einem der vorhergehenden Ansprüche, **dadurch gekennzeichnet, dass** die Fächer (19) des Magazins (18) zu drei benachbarten Schmalseiten zumindest abschnittsweise offen sind und die Flüssigkeitsträger (5) ein Fach (19) an zwei gegenüberliegend abgewandten Schmalseiten überragen, und dass die Formschlussmittel (12) vorzugsweise im die Fächer (19) überragenden Bereich der Schmalseiten angeordnet sind.
